# EUROPEAN PATENT APPLICATION

(11) **EP 2 434 230 A2**
(43) Date of publication of application: **28.03.2012**
(21) Application number: 11006994.5
(22) Date of filing: 26.08.2011
(51) Int. Cl.: F24J 2/52, H01L 31/042, F24J 2/46

(54) **Supporting and fixing structure for flat panels or photovoltaic modules in coplanar position, and that allows the water to be drained off**

(30) Priority: 24.09.2010 IT AN20100155
(71) Applicant: ENERGY RESOURCES S.p.a., 20122 Milano (IT)
(72) Inventor: Lucchetti, Luigi, 60100 Ancona (IT); Cappanera, Enrico, 60100 Ancona (IT); Mainardi, Emanuele, 60100 Ancona (IT)
(74) Representative: Statti, Francesco

(57) **Abstract**

This invention concerns structures used to support and mount flat panels such as solar panels or photovoltaic modules. Said structures consist of at least two longitudinal profiles and two transversal "U-shaped" profiles, as well as other accessories to drain rainwater from a sloping surface.

## Description

### Field of Invention

This invention concerns structures used to support and mount flat panels such as solar panels or photovoltaic modules. These structures consist of at least two longitudinal profiles and two transversal "U-shaped" profiles, as well as other accessories to drain rainwater from a sloping surface.

### Background

The possibility of installing all kinds of plant engineering on the roof of buildings is well known, and flat panels or photovoltaic modules in particular to produce electricity, and solar panels to produce hot water.

It is also known that roofs with an angle of between 16° and 33° are ideal for the installation of such plants.

Photovoltaic modules or solar panels should be fixed solidly to the roof or supporting surface using a variety of mounting systems, such as a structure anchored to the supporting section made generally of extruded profiles used to support the panels, and a range of accessories such as terminals, screws and bolts to fix the flat panels to the structure.

It is also known that in the case of plants with multiple photovoltaic modules or solar panels, the panels are installed adjacent to each other to form a regular grid. This configuration makes it hard to seal the joints between the panels, especially on roofs with a low slope.

The most common structures currently on the market provide support and fixings for flat panels or photovoltaic modules without disposing of rainwater. These structures rest on the waterproofing membrane and it is the latter that has to drain the rainwater (through gutters and downpipes).

International application WO 03/007688 A2 published on 30/01/2003, describes a removable and calibrated system for the installation of a photovoltaic module or flat panel on an object consisting of a track and a range of accessories to anchor the track to the supporting surface. The track has at least two cavities with the longitudinal axis parallel to the longitudinal axis of the track itself to insert anchoring systems for photovoltaic panels or flat panels. This system rests on the waterproofing membrane, and does not envisage the sealing of the joints between adjacent panels. The rainwater is disposed of by the waterproofing membrane.

International application WO 2004/055294 A1 published on 01/07/2004, concerns a frame for flat panels made by assembling several bracket mounted shaped sheet profiles; the frame seals the outer edges of the flat panels installed on a sloping surface. These profiles are made of fretted bracket mounted sheet and have a "U-shaped" transversal section to drain the water. The system includes a "collecting" part and a "draining" part; the "draining" part has the same slope as the roof with the "collecting" part overlapping at the top.

European application EP 2012365 A1, published on 07/01/2009, describes a device to be integrated on a roof for solar panels, and photovoltaic modules in particular, with a frame applied to each single module.

All the modules are installed on the same plane, so the system drains the rainwater along the joints between adjacent modules, in both directions (parallel to the gutter line and perpendicular to the gutter line).

The above frame consists of a flat element with the same surface area as the solar panel and a series of parts to be applied to the perimeter of the same element to seal the joints between adjacent flat panels or photovoltaic modules.

European application EP 2034249 A1, published on 11/03/2009, describes an integrated system for several solar panels on a roof, in particular panels for the production of hot water, with a frame for each module. All the modules are installed on the same plane, so the system drains the rainwater along the joints between adjacent modules, in both directions (parallel to the gutter line and perpendicular to the gutter line). The above frame has a top, a bottom and at least two channels with a "U-shaped" transversal section connecting the top and bottom.

International application WO 2008/145913 A2, published on 4/12/2008, proposes a structure to be applied to the curtain walling of buildings, be them vertical, horizontal or inclined, to support and anchor flat panels and photovoltaic modules in particular.

The structure consists of a primary frame, a series of "U-shaped" transversal profiles, and a series of devices for anchoring the primary frame to the supporting surface, the transversal profiles to the primary frame, and the flat panels or photovoltaic modules to the primary frame respectively.

The profiles in the primary frame are arranged on the supporting surface with a longitudinal axis perpendicular to the gutter line and a distance between elements equal to the pitch of the flat panels along the direction parallel to the gutter line.

The transversal "U-shaped" profiles rest on the primary frame, with the longitudinal axis parallel to the gutter line, and a distance between elements equal to the width of the flat panels perpendicular to the gutter line. Both frames have a transversal section so the profiles can act as a gutter. The presence of holes in the transversal profiles where they cross the primary frame, drains the rainwater from the transversal profiles as they have a "U-shaped" section, to the primary frame.

### Disclosure of Invention

The aim of this invention is to solve the problems mentioned above, proposing a structure for supporting and fixing flat panels, photovoltaic modules in particular, that solves the above problems and makes it possible to adapt the structure of this invention to every type of photovoltaic module or flat panel, with or without a cornice, and without having to use custom solutions to adapt the system to the wide variety of photovoltaic modules or solar panels available.

Another aim of this invention is to seal the joints between the panels, thanks to the configuration of the support structure and the method of assembly for mounting flat panels or photovoltaic modules.

Another aim of this invention is to favour the drainage of rainwater using the surface of flat panels or photovoltaic modules and their longitudinal profiles. A further aim of this invention is to make maintenance or replacement of a single solar panel easy, without having to uninstall or move adjacent panels. These and other aims are achieved by this invention, which concerns a structure for supporting and fixing one or more flat panels, in particular photovoltaic modules, on inclined surfaces to drain rainwater, with:
- at least two longitudinal profiles installed with an axis perpendicular to the gutter line of a supporting surface or roof, which constitute the primary frame supporting the flat panels or photovoltaic modules and drain the rainwater along the joints perpendicular to the gutter line and positioned between adjacent flat panels;
- at least two transversal "U-shaped" profiles installed so their axis is not at right angles to the longitudinal axis of the primary frame profiles, to drain the rainwater along the joints parallel to the gutter line and fixed between adjacent panels;
- accessories for anchoring the longitudinal profiles of the primary frame to the supporting surface;
- accessories, clamps or clips for fixing said flat panels or photovoltaic modules to the longitudinal profiles of the primary frame on the same plane as the flat panels or photovoltaic modules.

The structure for supporting and mounting one or more flat panels or photovoltaic panels can be prepared for panels with or without a cornice. Likewise, the longitudinal profiles, transversal profiles, accessories for anchoring the same profiles to the supporting surface, and the clamps for fixing the flat panels to the longitudinal profiles, are made of metal or polymer-based material.

The installation of the above structure for supporting and mounting one or more flat panels, in particular solar modules, involves the following steps:
a) place at least two longitudinal profiles on the supporting surface, parallel with each other and perpendicular to the gutter line;
b) place at least two transversal profiles on the supporting section of the primary frame profile, parallel to each other and not perpendicular to the longitudinal axis of the primary frame profiles;
c) place the flat panels or photovoltaic modules on the appropriate supporting section of the primary frame profile;
d) fix the photovoltaic modules to these primary frame longitudinal profiles using clamps, clips or accessories of various kinds, so the transversal profiles are located at the joints between panels parallel to the gutter line.

### Detailed description

Additional features and advantages of the invention become obvious in the description of a type of execution, preferred but not exclusive to this application, described by way of example but not limited to the designs in which:
Fig. 1A shows a 3D view of the first installation phase of the structure for supporting and mounting flat panels or photovoltaic modules;
Fig. 1B shows a 3D view of the second installation phase of the structure for supporting and mounting flat panels or photovoltaic modules;
Fig. 1C shows a 3D view of the third installation phase of the structure for supporting and mounting flat panels or photovoltaic modules;
Fig. 1D shows a 3D view of the forth installation phase of the structure for supporting and mounting flat panels or photovoltaic modules;
Fig. 1E shows a 3D view of the fifth installation phase of the structure for supporting and mounting flat panels or photovoltaic modules;
Fig. 1F shows a detailed 3D section of the structure for supporting and mounting flat panels or photovoltaic modules;
Fig. 2A shows the exploded cross section of the structure for supporting and mounting flat panels or photovoltaic modules;
Fig. 2B shows the cross section of the structure for supporting and mounting flat panels or photovoltaic modules assembled;
Fig. 3A shows the detailed general cross section of the structure for supporting and mounting flat panels or photovoltaic modules assembled;
Fig. 3B shows the detailed cross section of the structure for supporting and mounting flat panels or photovoltaic modules assembled;
Fig. 3C shows the detailed exploded cross section of the structure for supporting and mounting flat panels or photovoltaic modules;
Fig. 4A shows the longitudinal section of the structure for supporting and mounting flat panels or photovoltaic modules assembled;
Fig. 4B shows the exploded longitudinal section of the structure for supporting and mounting flat panels or photovoltaic modules;
Fig. 4C shows the detailed exploded longitudinal section of the structure for supporting and mounting flat panels or photovoltaic modules;
Fig. 5 shows a view from above of the structure for supporting and mounting flat panels or photovoltaic modules;

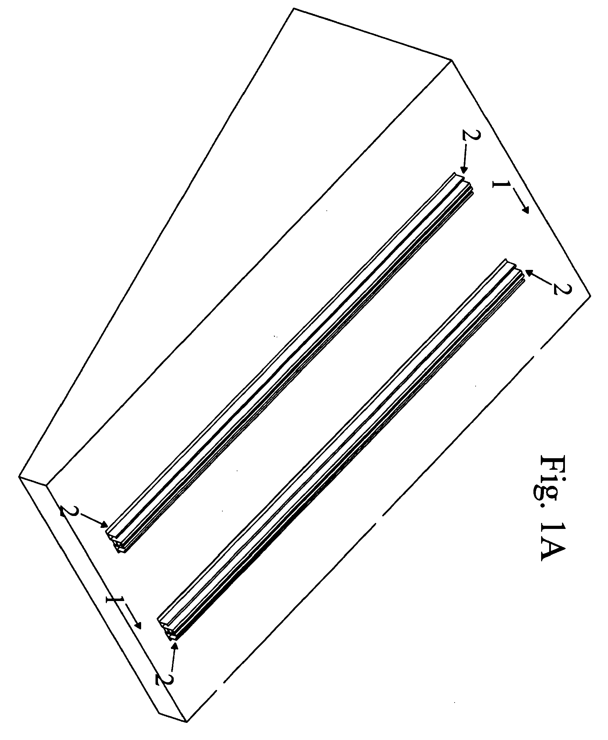

Fig. 1A shows a 3D view of the first installation phase of the structure for supporting and mounting flat panels or photovoltaic modules; in particular Figure 1 A shows the following components: the supporting surface (1) and longitudinal profiles (2), positioned with the longitudinal axis parallel to the maximum slope of the roof or supporting surface (1). The supporting surface (1) is an inclined surface on which the profiles (2) are positioned with the longitudinal axis parallel to the maximum slope of the roof or supporting surface (1). The distance between these longitudinal profiles (2) is equal to the width of the flat panels or photovoltaic modules (4).

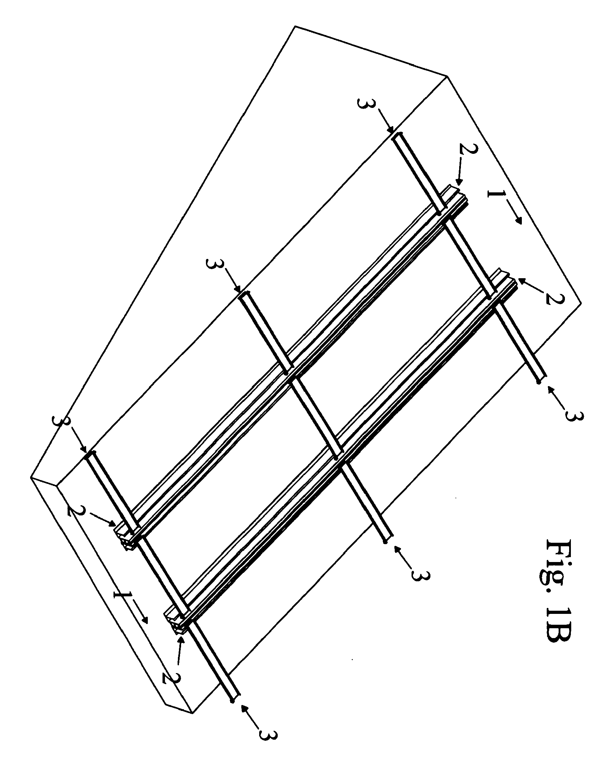

Fig 1 B shows a 3D view of the second installation phase of the structure for supporting and mounting flat panels or photovoltaic modules; in particular Figure 1B shows the following components: supporting surface (1), the longitudinal profiles of the primary frame (2) and the "U-shaped" transversal profiles (3).

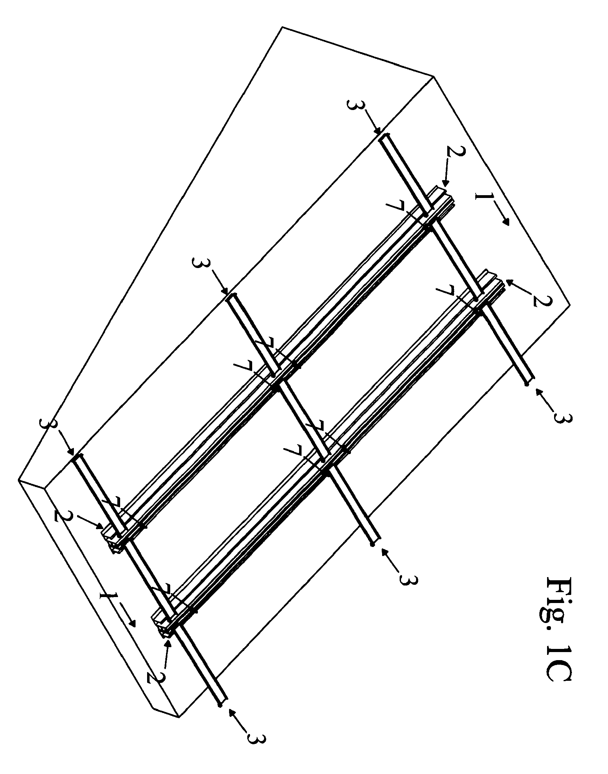

Fig 1C shows a 3D view of the third installation phase of the structure for supporting and mounting flat panels or photovoltaic modules; in particular Figure 1C shows the following components: supporting surface (1), the longitudinal profiles of the primary frame (2), the transversal "U-shaped" profiles (3) and the mounting system (7).

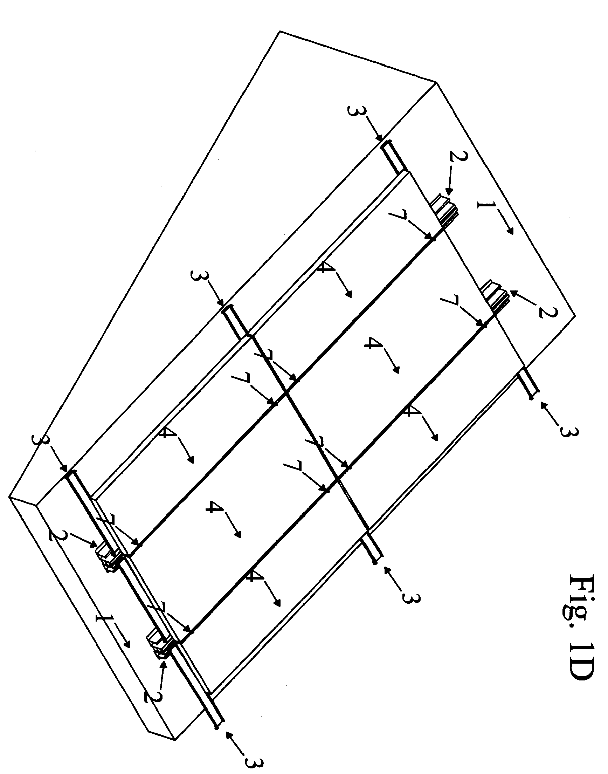

Fig 1D shows a 3D view of the fourth installation phase of the structure for supporting and mounting flat panels or photovoltaic modules; in particular Figure 1D shows the following parts: supporting surface (1), the longitudinal profiles of the primary frame (2), the "U-shaped" transversal profiles (3), the mounting system (7) and the flat panels or photovoltaic modules (4).

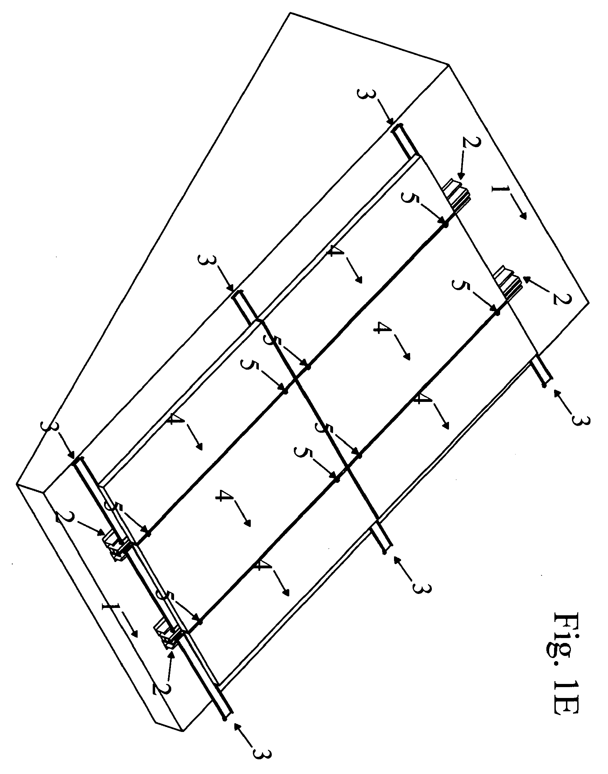

Fig 1E shows a 3D view of the fifth installation phase of the structure for supporting and mounting flat panels or photovoltaic modules; in particular Figure 1E shows the following parts: supporting surface (1), the longitudinal profiles of the primary frame (2), the "U-shaped" transversal profiles (3), the mounting system (5) and the flat panels or photovoltaic modules (4).

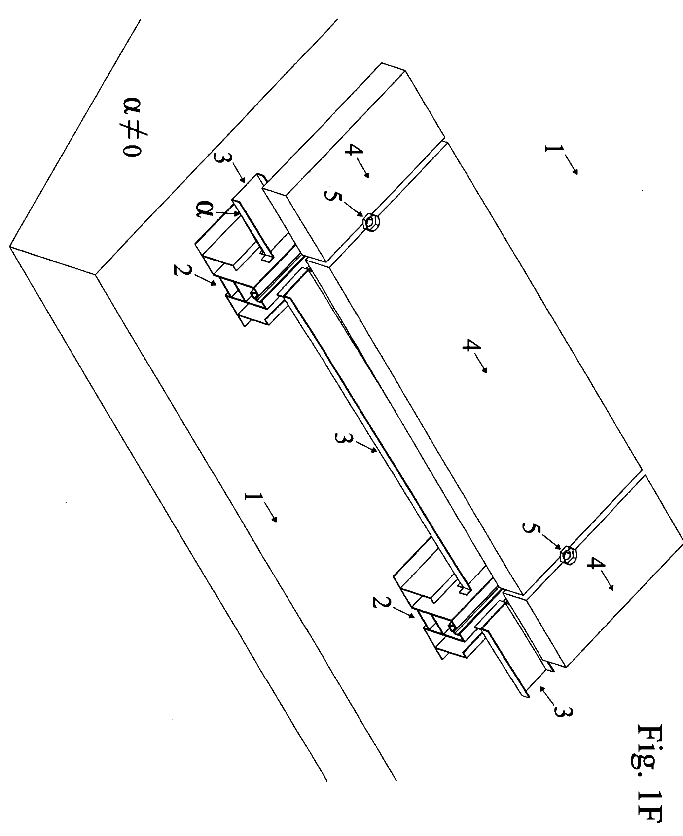

Fig 1F shows a detailed 3D section of the structure for supporting and mounting flat panels or photovoltaic modules; in particular Figure 1F shows the following parts: the supporting surface (1), the longitudinal profiles of the primary frame (2), the "U-shaped" transversal profiles (3), the mounting system (5) and flat panels or photovoltaic modules (4).

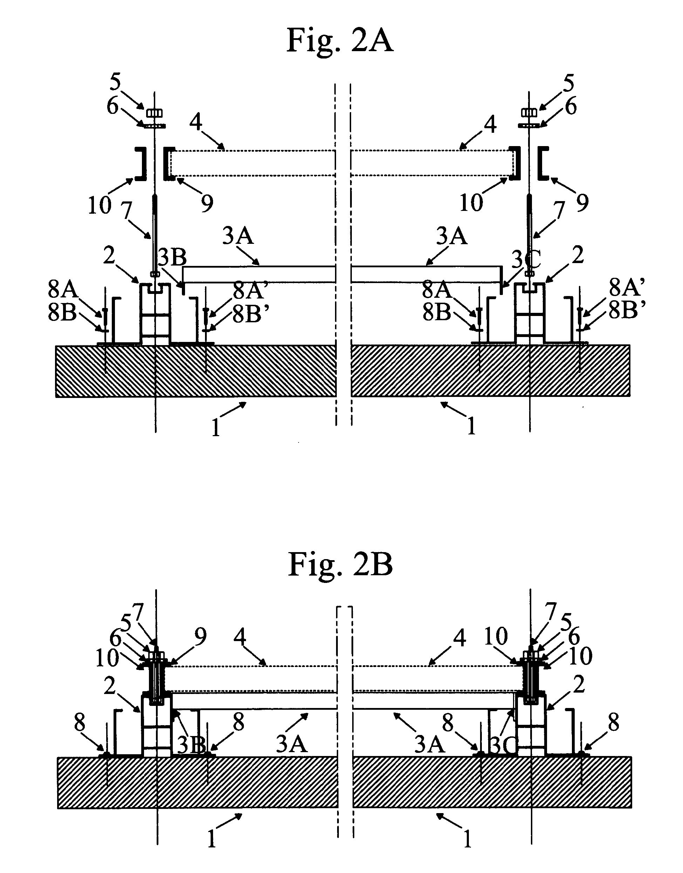

Fig 2A shows an exploded cross section of the structure for supporting and mounting flat panels or photovoltaic modules, with: the supporting surface (1), the longitudinal profiles of the primary frame (2), the "U-shaped" transversal profiles (3). These profiles consist of a "U-shaped" section (3A) used to collect rainwater and two side flanges under the "U-shaped" section, one on the right (3B) and one on the left (3C) of the above profile, which drain rainwater to the drain of the primary frame longitudinal profile (2). The flat panels or photovoltaic modules are mounted on the primary frame profiles by suitable fasteners (5), (6) and (7), while the primary frame profiles are fixed to the supporting surface with appropriate fasteners (8A), (8B), (8A') and (8B'). Figure 2A also shows elastomers (9) and (10) covering the seat of the edge on the flat panels or photovoltaic modules (4).

Fig 2B shows an assembled cross section of the structure for supporting and mounting flat panels or photovoltaic modules, with: the supporting surface (1), the longitudinal profiles of the primary frame (2), the "U-shaped" transversal profiles (3). These profiles consist of a "U-shaped" section (3A) used to collect rainwater and two side flanges under the "U-shaped" section, one on the right (3B) and one on the left (3C) of the above profile, which drain rainwater to the drain of the primary frame longitudinal profile (2). The flat panels or photovoltaic modules are mounted on the primary frame profiles by suitable fasteners (5), (6) and (7), while the primary frame profiles are fixed to the supporting surface with appropriate fasteners (8). The structure for supporting and mounting one or more flat panels or photovoltaic panels (4) can be prepared for panels with or without a cornice. Likewise, the longitudinal profiles for the primary frame (2) and "U-shaped" transversal sections (3), the accessories for anchoring (8) the above profiles (2) to the supporting surface (1) and the above flat panels or photovoltaic modules (4), are made of metal or polymer-based material.

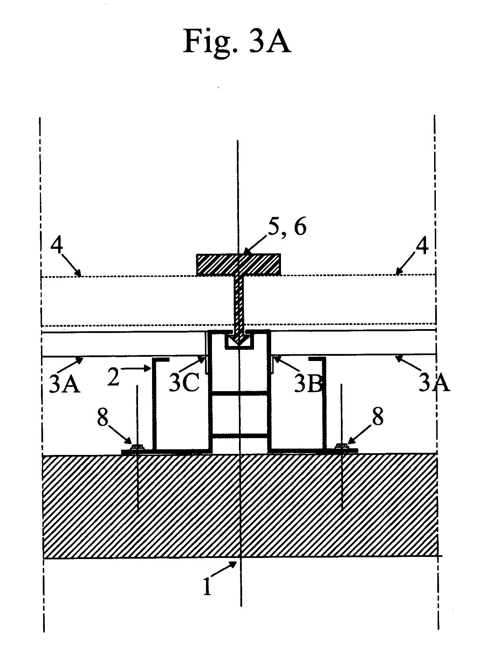

Fig 3A shows the detailed cross section of the structure for supporting and mounting flat panels or photovoltaic modules assembled. In particular, Fig. 3A shows the following parts: the supporting surface (1), the longitudinal profiles of the primary frame (2), the "U-shaped" transversal profiles (3). These profiles consist of a "U-shaped" section (3A) used to collect rainwater and two side flanges under the "U-shaped" section, one on the right (3B) and one on the left (3C) of the above profile, which drain rainwater to the drain of the primary frame longitudinal profile (2). The flat panels or photovoltaic modules (4) are mounted on the primary frame profiles with suitable fasteners (5) and (6), and the primary frame profiles are fixed to the supporting surface with appropriate fasteners (8).

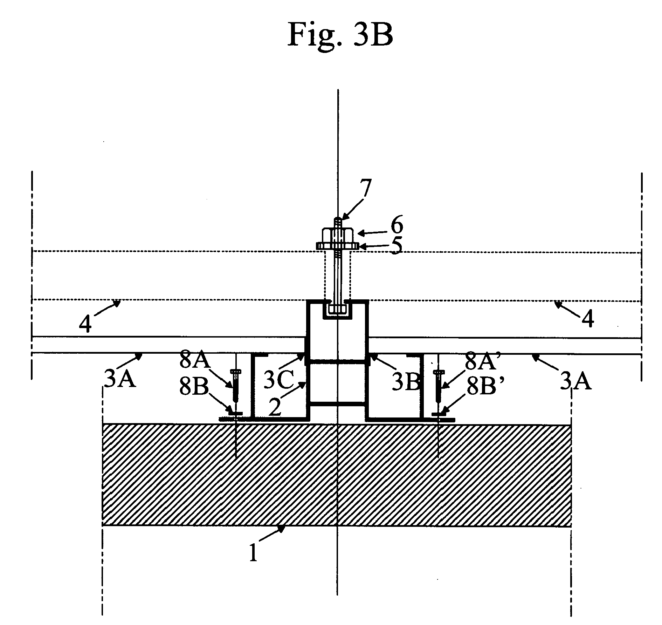

Fig. 3B shows an detailed view of the cross section of the structure for supporting and mounting flat panels or photovoltaic modules assembled, with: the supporting surface (1), the longitudinal profiles of the primary frame (2), the "U-shaped" transversal profiles (3). These profiles consist of a "U-shaped" section (3A) used to collect rainwater and two side flanges under the "U-shaped" section, one on the right (3B) and one on the left (3C) of the above profile, which drain rainwater to the drain of the primary frame longitudinal profile (2). The flat panels or photovoltaic modules (4) are mounted on the primary frame profiles by suitable fasteners (5), (6) and (7), while the primary frame profiles are fixed to the supporting surface with appropriate fasteners (8A), (8B), (8A') and (8B').

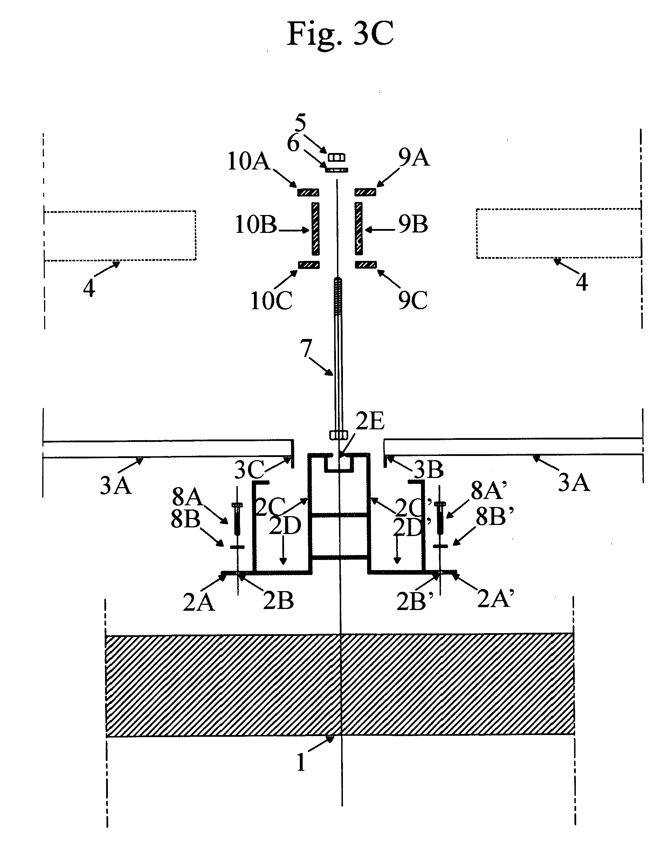

Fig. 3C shows the detailed exploded cross section of the structure for supporting and mounting flat panels or photovoltaic modules. In particular, Fig. 3C shows how the edge of the flat panel or photovoltaic module (4) can be partially or completely covered by special elastomers (9) and (10), comprising at least one vertical side (9B) and (10B) and two horizontal sides (9A) and (9C), (10A) and (10C). The elastomeric elements (9) and (10) are arranged on part of the inactive portion (i.e. the portion of the solar cell surface which is not used) on the upper surface of the flat panel or photovoltaic module (4). Elastomeric elements (9A) and (10A), (9B) and (10B) are advantageously positioned on the entire inactive portion of the upper surface of flat panel (4), along the top and bottom edge. The elastomeric elements, substantially a "C-shaped" section, corresponding to the profile of the panel or photovoltaic module (4), make coupling between the elastomeric element (9) and (10) and the top edge of the flat panel or photovoltaic module (4), easy. The size of the "C" sections was chosen so they come into contact with the upper edge of the flat panel or photovoltaic module (4), making it easier to hold in place, representing an even more advantageous feature. This makes it easy to create a watertight overlap between two flat panels or photovoltaic modules (4). The thickness of the elastomeric elements (9) and (10) is advantageous, as it is less than half the thickness of the flat panel or photovoltaic module (4), so the installation maintains a sufficient slope to drain rainwater. Vertical elastomeric elements (9B) and (10B) are arranged at least partially on the lateral surface of the flat panel or photovoltaic module (4), to tighten the fastening system (7). The first and second elastomeric element (9) and (10), can be integrated with one another, which represents another advantage. Lower side flanges (3B) and (3C) of the transversal "U-shaped" profiles are fixed at the height of elements (2C') and (2C) respectively, of the primary frame longitudinal profile (2). Flanges (3B) and (3C) drain the rainwater respectively in areas (2D') and (2D) of the primary frame longitudinal profile (2). The distance between the holes (2B), in flange (2A) and hole (2B'), in flange (2A') along the longitudinal axis, must be calculated according to the characteristics of the supporting surface (1). Said hole (2B) is to insert fasteners (8A) and (8B), while hole (2B') is to insert fasteners (8A') and (8B').

The overlapping part of the primary frame longitudinal profile (2) is characterized by a groove (2E) in which the appropriate fasteners (5), (6) and (7) are inserted to fix the flat panels or photovoltaic modules (4). This groove (2E) runs along the length of the profile and the longitudinal axes, parallel to the longitudinal axis of the profile.

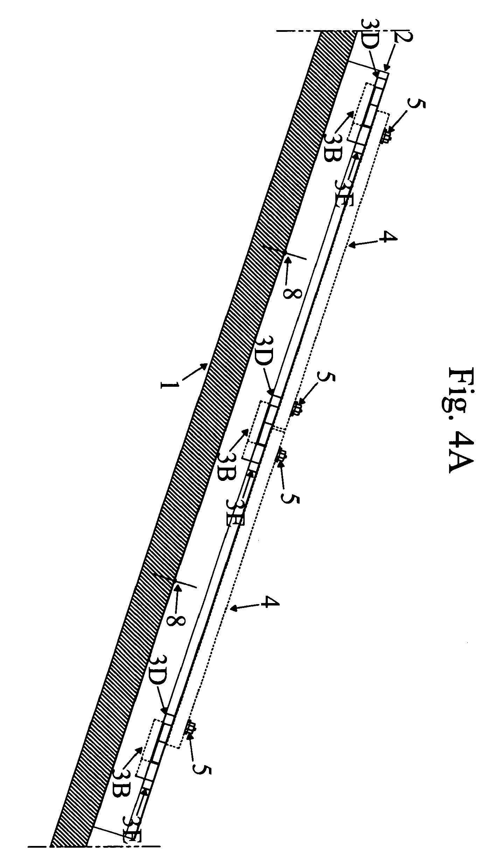

Fig 4A shows the longitudinal section of the structure for supporting and mounting flat panels or photovoltaic modules assembled, with the fasteners (8), the longitudinal profile of the primary frame (2), the supporting surface (1), and the "U-shaped" transversal profiles (3). The side flanges (3D) and (3E), respectively for fixing elements (2C') and (2C) of primary frame longitudinal profile (2), and lower side flange (3B), which drains the rainwater to the drain in the primary frame longitudinal profile (2) are shown for this "U-shaped" profile.

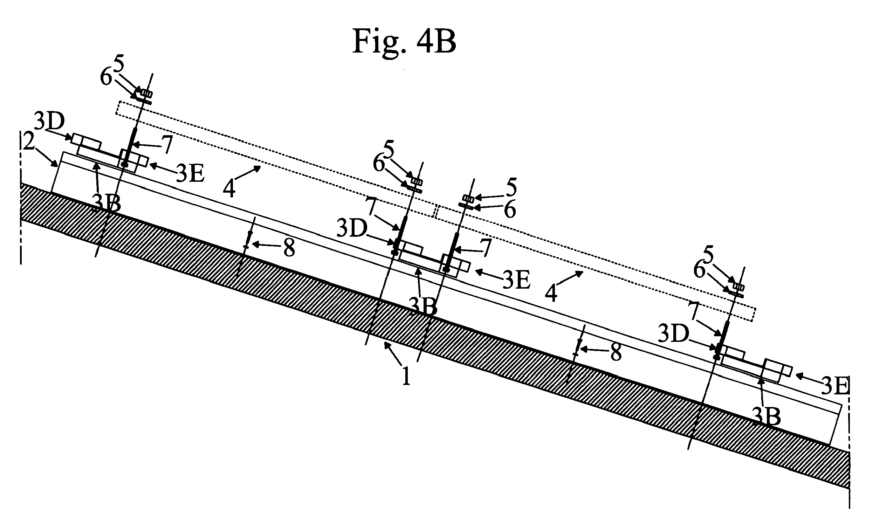

Fig 4B shows the exploded longitudinal section of the structure for supporting and mounting flat panels or photovoltaic modules, with fasteners (8A) and (8B) for fixing the longitudinal profile of the primary frame (2) to the supporting surface (1), the transversal "U-shaped" profile (3) and fasteners (5), (6) and (7) for fixing the flat panels or photovoltaic modules (4). The side flanges (3D) and (3E), respectively for fixing the vertical elements of the primary frame longitudinal profile (2), and lower side flange (3B), which drains the rainwater to the drain in the primary frame longitudinal profile (2) are shown for this "U-shaped" profile.

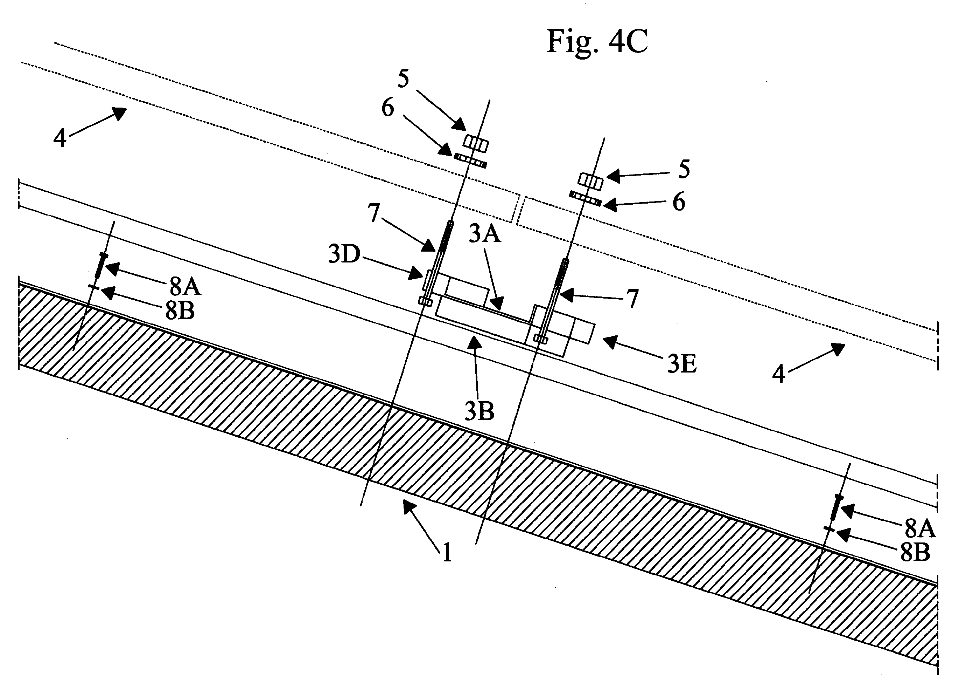

Fig 4C shows a detailed view of the exploded longitudinal section of the structure for supporting and mounting flat panels or photovoltaic modules, with fasteners (8A) (8B) for fixing the longitudinal profile of the primary frame (2) to the supporting surface (1), the transversal "U-shaped" profile (3) and fasteners (5), (6) and (7) for fixing the flat panels or photovoltaic modules (4). The side flanges (3D) and (3E), respectively for fixing the vertical elements of the primary frame longitudinal profile (2), and lower side flange (3B), which drains the rainwater to the drain in the primary frame longitudinal profile (2) are shown for this "U-shaped" profile.

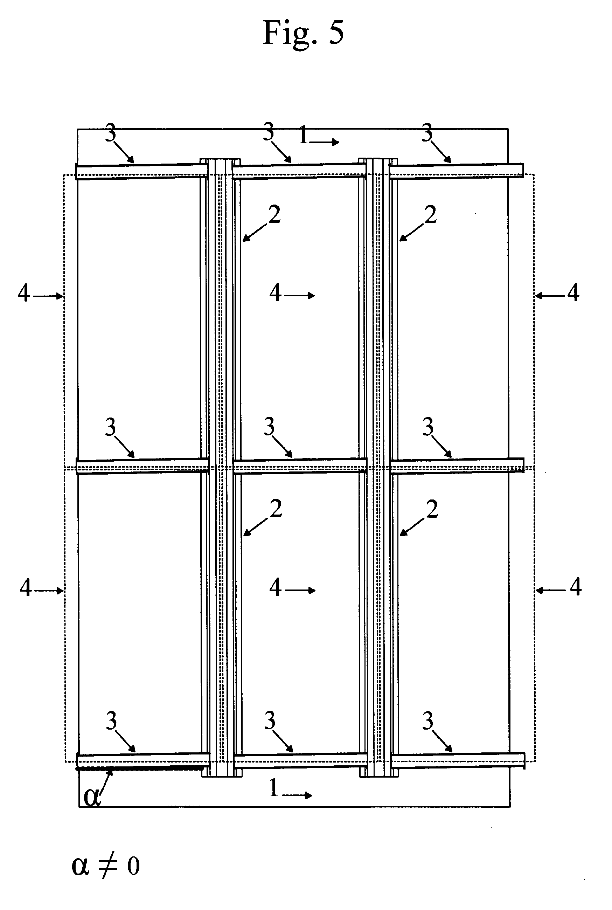

Fig 5 shows a view from above of the structure for supporting and mounting flat panels or photovoltaic modules, highlighting the location of the supporting surface (1), the longitudinal profiles of the primary frame (2), the "U-shaped" transversal profiles (3) and the flat panels or photovoltaic modules (4).

The above structure has many advantages compared to current state-of-the-art structures, in fact:
- this invention is applicable to any type of flat panel or photovoltaic module with and without a cornice, and customized or one-off solutions are not required to adapt the system to the wide variety of photovoltaic modules or solar panels available.
- The joints between adjacent flat panels are sealed by this invention in two ways, adopting a longitudinal support profile with an appropriately configured section to drain rainwater along the joint of the panels installed perpendicular to the gutter line; and by overlapping the edges parallel to the gutter line so the rainwater runs off the panel and onto the panel below to then drain into the gutter. Finally, the joints are sealed due to the configuration of the supporting structure and the method used to fix the flat panels or photovoltaic modules.
- The rainwater runs off the surface of the flat panels or photovoltaic modules and down the longitudinal profiles without having to install an element for the rainwater to run off, installed between the panels and the supporting surface, acting as a waterproofing membrane.
- The flat panels are held in place by four clamps that hold the edges perpendicular to the gutter line. The pair of clamps at the top of the panel (ridge side) are lower than the two clamps at the bottom of the panel (gutter side). This makes it possible to overlap the panels. In the case of maintenance and/or replacement of a single flat panel or photovoltaic module, the above fixing device lets you uninstall only the panel subject to intervention, without having to remove, alter or move any adjacent panels.
- The longitudinal profile of the primary frame in the fastening system has two side flanges with an extension equal to the length of the same profile. The above flanges have holes of a suitable pitch and size to guarantee the secure fixing of the longitudinal profile on the supporting surface. There is no need for holes on the horizontal surface of the gutter, leaving the water-carrying channel intact.

This invention is susceptible of numerous modifications and variations, all of which fall within the scope of the inventive concept. The materials and dimensions of the invention described above, illustrated in the attached drawings and later laid claim to, may be any such materials and dimensions required.

## Claims

1. Structure for supporting and mounting one or more flat panels, in particular photovoltaic modules on inclined surfaces (1), to drain rainwater, **characterized by**:
a) at least two longitudinal profiles (2) which, installed with a longitudinal axis perpendicular to the gutter line of a roof or supporting surface, act as the primary frame (2) for supporting flat panels or photovoltaic modules (4) to drain rainwater along the joints perpendicular to the gutter line and positioned between the adjacent flat panels;
b) at least two transversal "U-shaped" profiles (3) installed so their axis is not at right angles to the longitudinal axis of the primary frame profiles (2), to drain the rainwater along the joints parallel to the gutter line and positioned between adjacent panels;
c) accessories (8) for anchoring the longitudinal profiles of the primary frame (2) to the supporting surface;
d) accessories, clamps or clips (5), (6), (7) for fixing said flat panels or photovoltaic modules (4) to the longitudinal profiles of the primary frame (2) on the same plane as the flat panels or photovoltaic modules.

2. Structure for supporting and mounting one or more flat panels, in particular photovoltaic modules, as per claim 1, in which the overlapping part of the primary frame longitudinal profile (2) is **characterized by** a groove (2E) in which the appropriate fasteners (5), (6), (7) are inserted to fix the flat panels or photovoltaic modules (4). This groove runs along the length of the profile and the longitudinal axes, parallel to the longitudinal axis of the profile.

3. Structure for supporting and mounting one or more flat panels, in particular photovoltaic modules, as per claim 1, in which the longitudinal primary frame profile (2) is **characterized by** two side channels (2D), (2D') running along the length of the profile and the longitudinal axes parallel to the longitudinal axis of the profile.

4. Structure for supporting and mounting one or more flat panels, in particular photovoltaic modules on inclined surfaces, as per claim 1, in which the longitudinal primary frame profile (2) is **characterized by** two vertical flanges (2C) and (2C') to support and fix transversal profiles (3), running along the length of the profile and the longitudinal axes parallel to the longitudinal axis of the profile.

5. Structure for supporting and mounting one or more flat panels, in particular photovoltaic modules, as per claim 1, in which the longitudinal primary frame profile (2) is **characterized by** two side flanges (2A) and (2A') running along the length of the profile, with holes (2B) and (2B') for the anchor systems used to fix the structure to the supporting surface.

6. Structure for supporting and mounting one or more flat panels, in particular photovoltaic modules, as per claim 1, in which the longitudinal primary frame profile (2) is **characterized by** a height that leaves room for air to circulate in the airspace between the flat panel or photovoltaic module (4) and the supporting surface (1).

7. Method for installing a structure for supporting and mounting one or more flat panels, in particular photovoltaic modules, as per claim 1 **characterized by** the following steps:
a) position at least two longitudinal profiles (2) on the supporting surface (1) parallel to each other, perpendicular to the gutter line;
b) place at least two transversal profiles (3) on the supporting section of the primary frame profile (2), parallel to each other and not perpendicular to the longitudinal axis of the primary frame profiles;
c) place the flat panels or photovoltaic modules (4) on the appropriate supporting section of the primary frame profile (2);
d) fix the photovoltaic modules (4) to these primary frame longitudinal profiles (2) using clamps, clips or accessories of various kinds (5), (6), (7) so that the transversal profiles (3) are located at the joints between panels parallel to the gutter line.
